Europäisches Patentamt

European Patent Office

Office européen des brevets

(19)

(11) Veröffentlichungsnummer : **0 085 852**
**B1**

(12) **EUROPÄISCHE PATENTSCHRIFT**

(45) Veröffentlichungstag der Patentschrift :
28.05.86

(21) Anmeldenummer : 83100380.1

(22) Anmeldetag : 18.01.83

(51) Int. Cl.⁴ : **F 16 K 39/02, F 16 K 11/04**

(54) 3/2-Wegeventil.

(30) Priorität : 23.01.82 DE 3202071

(43) Veröffentlichungstag der Anmeldung :
17.08.83 Patentblatt 83/33

(45) Bekanntmachung des Hinweises auf die Patenterteilung : 28.05.86 Patentblatt 86/22

(84) Benannte Vertragsstaaten :
AT BE CH DE FR GB IT LI NL SE

(56) Entgegenhaltungen :
DD-A- 100 067
DE-A- 1 550 198
DE-A- 2 925 474
DE-A- 3 023 515
DE-B- 1 194 663
DE-U- 1 935 819
US-A- 3 099 290
US-A- 3 540 478
US-A- 3 592 227

(73) Patentinhaber : A. und K. Müller GmbH & Co. KG
Bücherstrasse 31-37
D-4000 Düsseldorf 13 (DE)

(72) Erfinder : Moldenhauer, Hermann
Suitbertusstrasse 114
D-4000 Düsseldorf 1 (DE)

(74) Vertreter : Feder, Heinz, Dr. et al
Dominikanerstrasse 37
D-4000 Düsseldorf 11 (DE)

EP 0 085 852 B1

**Beschreibung**

Die vorliegende Erfindung betrifft ein 3/2-Wegeventil mit einem Ventilgehäuse, durch welches Zufluß- und Abflußkanäle geführt sind und in dem zwei jeweils mit einem der Abflußkanäle direkt verbundene Ventilkammern angeordnet sind, die jeweils über einen Ventilsitz mit einem gemeinsamen Zuflußkanal verbunden sind, wobei jedem Ventilsitz ein in der Ventilkammer angeordneter Ventilteller gegenüberliegt, der einstückig in eine geschlossene, mit ihren Rändern am Ventilgehäuse befestigte Membran integriert ist, welche jeweils in einer der Ventilkammern an der dem Ventilsitz gegenüberliegenden Seite angeordnet ist und beide Ventilteller über eine in ihrer Bewegungsrichtung starre, mechanische Koppelungsvorrichtung miteinander so verbunden sind, daß sich jeweils ein Ventilteller in Öffnungsrichtung bewegt, während sich der andere in Schließrichtung bewegt und eine Betätigungsvorrichtung zur Bewegung der Ventilteller vorhanden ist.

Ein derartiges Ventil ist beispielsweise in der DE-A-15 50 198 beschrieben.

Das bekannte Ventil hat den Nachteil, daß seine Funktionsweise vom herrschenden Mediumsdruck abhängig ist. Dies hat zur Folge, daß zu seiner Betätigung relativ hohe Schaltkräfte nötig sind.

Aus der DE-A-30 23 515 ist es weiterhin bekannt, bei einem Durchflußventil zu beiden Seiten des Ventilsitzes je eine Rollmembran anzuordnen, wobei die beiden Rollmembranen identisch ausgebildet und spiegelsymmetrisch zueinander angeordnet sind und ihr wirksamer Querschnitt dem Dichtquerschnitt zwischen Ventilsitz und Verschlußkörper entspricht. Hierdurch soll eine Entlastung des bekannten Ventils vom Mediumsdruck erreicht werden.

Die der Erfindung zugrunde liegende Aufgabe bestand darin, ein 3/2-Wegeventil der eingangs erwähnten Bauart so auszubilden, daß bei geringem Konstruktionsaufwand eine Unabhängigkeit der Funktionsweise vom herrschenden Mediumsdruck erreicht werden kann und das Ventil insbesondere zur Verwendung bei größeren Nennweiten geeignet ist.

Die Lösung dieser Aufgabe besteht darin, daß gemäß der Erfindung Membran und Ventilteller jeweils so ausgebildet sind, daß die Fläche der Membran, auf die der Systemdruck bei vom Ventilsitz abgehobenem Ventilteller einwirkt, im wesentlichen gleich ist der Fläche auf die der Systemdruck bei auf den Ventilsitz aufgesetztem Ventilteller einwirkt und daß die Membranen als Rollmembranen ausgebildet sind, wobei an der vom Ventilsitz abgewandten Seite jeder Rollmembran ein Abstützkörper angeordnet ist, dessen als Abrollfläche für die Membran dienende Mantelfläche einen ersten, sich an den Ventilteller anschließenden Abschnitt aufweist, der konisch vom Ventilteller weg auf dessen Mittelachse zulaufend ausgebildet ist, sowie einen sich an den ersten Abschnitt anschließenden zylinderförmig ausgebildeten zweiten Abschnitt, dem ein hohlzylinderförmiger Abschnitt einer mit dem Ventilgehäuse verbundenen Abrollfläche gegenüberliegt, wobei die Dimensionierung des konischen Abschnittes so ist, daß der Durchmesser des zwischen den beiden zylindrischen Abschnitten der Abrollflächen liegenden Scheitelkreises der Falte der Rollmembran mindestens angenähert dem Durchmesser der Fläche entspricht, auf die der Systemdruck bei auf den Ventilsitz aufgesetztem Ventilteller einwirkt.

Als Koppelungsvorrichtung kann eine durch das Gehäuse hindurchgeführte Verbindungsstange dienen.

Falls eine Durchführung der Koppelungsvorrichtung durch das Gehäuse und damit durch die Ventilkammern bzw. den Zuflußkanal oder die Abflußkanäle vermieden werden soll, kann die Koppelungsvorrichtung auch als rechteckiger, das Ventilgehäuse außen umfassender Rahmen ausgebildet sein.

Im folgenden werden anhand der beigefügten Zeichnungen zwei Ausführungsbeispiele für ein Ventil nach der Erfindung näher erläutert.

In den Zeichnungen zeigen :

Figur 1 einen Schnitt durch eine erste Ausführungsform eines 3/2-Wegeventiles nach der Erfindung ;

Figur 2 eine Variante der Ausführungsform nach Fig. 1.

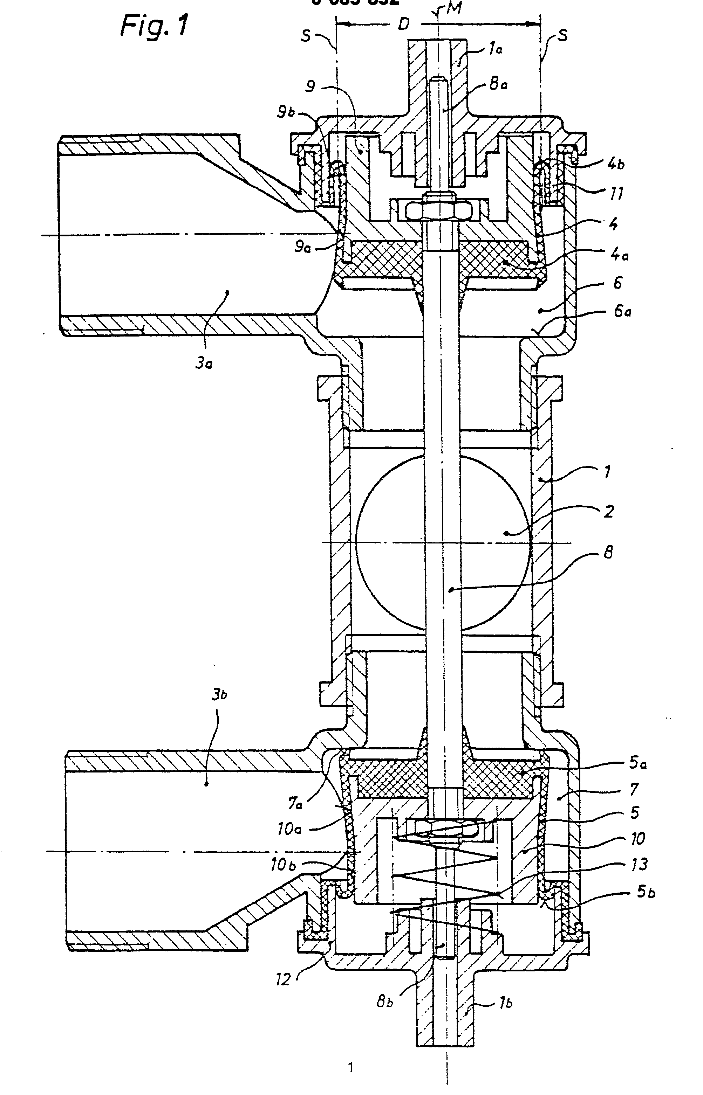

Das in Fig. 1 dargestellte 3/2-Wegeventil besitzt ein Ventilgehäuse 1, in das ein Zuflußkanal 2 und zwei Abflußkanäle 3a, 3b hineingeführt sind. An zwei gegenüberliegenden Seiten des Gehäuses sind Ventilkammern 6 und 7 angeordnet, die jeweils direkt mit einem der Abflüsse 3a und 3b und über einen Ventilsitz 6a und 7a mit dem gemeinsamen Zuflußkanal 2 verbunden sind. Die einander gegenüberliegenden Enden des Ventilgehäuses 1 sind mit Deckeln 1a und 1b abgeschlossen. In der Ventilkammer 6 ist eine Rollmembran 4 angeordnet, deren Ränder zwischen dem Deckel 1a und dem Gehäuse 1 eingespannt sind, während in der Ventilkammer 7 in der gleichen Weise eine Rollmembran 5 mit ihren Rändern zwischen dem Deckel 1b und dem Gehäuse 1 befestigt ist. In die Membran 4 einstückig integriert ist ein Ventilteller 4a, der dem Ventilsitz 6a gegenüberliegt, während in die Membran 5 in der gleichen Weise ein dem Ventilsitz 7a gegenüberliegender Ventilteller 5a integriert ist.

Die Abflüsse 3a und 3b münden quer zur Bewegungsrichtung der Ventilteller 4a, 5a in die Ventilkammer 6 und 7 ein. Die Ventilteller 4a, 5a sind über eine durch das Innere des Ventilgehäuses 1 hindurchlaufende Stange 8 in ihrer Bewegungsrichtung starr miteinander verbunden, und zwar, wie aus der Zeichnung abzulesen, so, daß sich die beiden Ventilteller 4a und 5a im Hinblick auf die Ventilsitze 6a und 7a gegensinnig bewegen, d. h. daß in den beiden Endstellungen jeweils ein Ventilteller vom Ventilsitz abgehoben ist, während der andere auf dem Ventilsitz aufsitzt. Die Bewegung der Ventilteller geschieht durch eine in der Zeichnung nicht näher dargestellte, beispielsweise an der Verbindungsstange 8 oder einer ihrer Verlängerungen 8a und 8b angreifenden Betätigungsvorrichtung, die beispielsweise als Magnetspule ausgebildet sein kann. Die Betätigung erfolgt jeweils in einer Richtung gegen die Kraft einer Druckfeder 13, die im dargestellten Ausführungsbeispiel zwischen dem Ventilteller 5a und dem Gehäusedeckel 1b angeordnet ist.

Um eine gute Führung bei der Bewegung der Ventilteller sicherzustellen, sind die Enden 8a und 8b der Verbindungsstange 8, die durch die Ventilteller hindurchtritt, in Führungen in den Deckeln 1a und 1b geführt.

Die Membranen 4 und 5 sind als Rollmembranen ausgebildet, die sich einerseits an einem Abstützkörper 9 bzw. 10 abstützen, der jeweils an der dem Ventilsitz 6a bzw. 7a abgewandten Seite des Ventiltellers angeordnet ist. Dieser Abstützkörper 9, 10 besitzt an seiner äußeren Mantelfläche einen ersten Abschnitt 9a, 10a, der sich in Richtung vom Ventilteller weg auf den Gehäusedeckel 1a, 1b zu konisch verjüngt. An diesen ersten Abschnitt schließt sich ein zweiter Abschnitt 9b, 10b der Mantelfläche des Abstützkörpers 9, 10 an, der zylindrisch ausgebildet ist. Mit den Gehäusedeckeln 1a, 1b sind zylinderförmige Abrollflächen 11 und 12 verbunden, die den zylindrischen Abschnitten 9b und 10b gegenüberliegen. Die Falte 4b und 5b der Rollmembran 4 und 5 liegt also jeweils zwischen den beiden Abrollflächen 11 und 9b bzw. 12 und 10b. Länge und Konizität des ersten Abschnittes 9a und 10a der Mantelfläche des Abstützkörpers 9 und 10 ist, wie aus Fig. 1 ablesbar, so gewählt, daß der Scheitelkreis der Falte 4b der Rollmembran 4 bzw. der Falte 5b der Rollmembran 5 sich zwischen den beiden Abstützflächen auf einem mit S bezeichneten Zylinder bewegt, dessen Durchmesser D mindestens angenähert dem Durchmesser der Dichtfläche des Ventilsitzes entspricht.

Dies hat zur Folge, daß, beispielsweise bei der in Fig. 1 dargestellten Stellung des Ventils, der auf den geschlossenen Ventilteller 5a wirkende Druck kompensiert wird durch den auf die gesamte Membran 4 wirkenden Druck, so daß auf das System der beiden miteinander gekoppelten Ventilteller 4a und 5a keine vom Systemdruck über den Zufluß 2 beeinflußten Kräfte wirken.

Das gleiche gilt auch für den anderen Schaltzustand des Ventils.

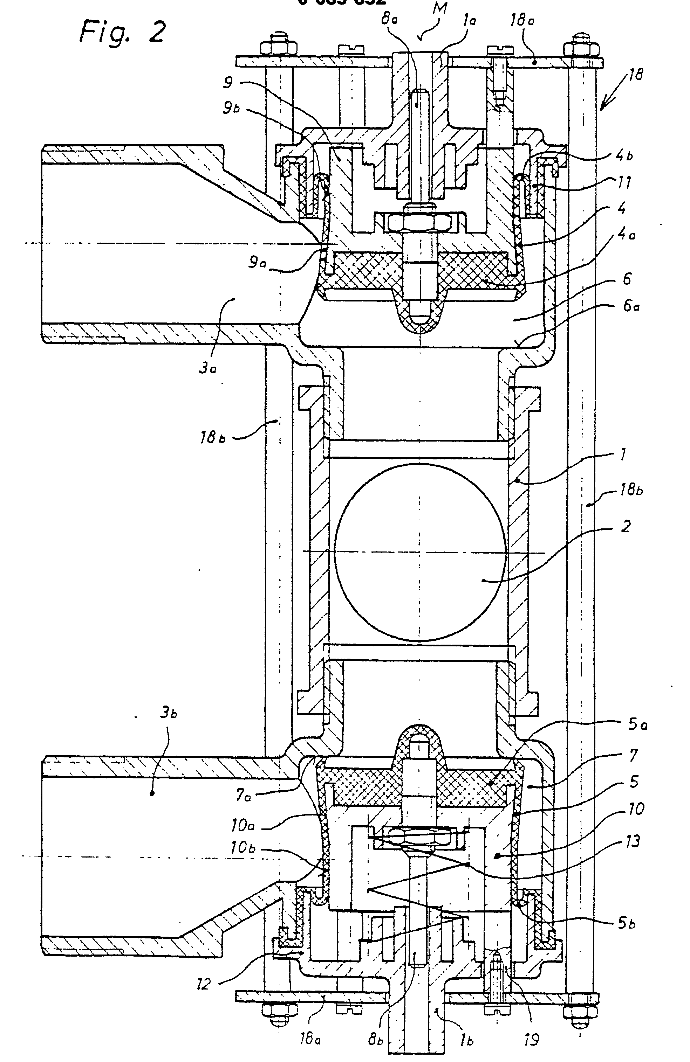

In Fig. 2 ist eine Variante der Ausführungsform nach Fig. 1 dargestellt, die sich von dieser lediglich in der Art der Koppelungsvorrichtung zwischen den beiden Ventiltellern unterscheidet. Aus diesem Grunde sind in Fig. 2 alle Teile, die denen der Ausführungsform nach Fig. 1 entsprechen, mit gleichen Bezugsziffern bezeichnet, und es wird bezüglich der Beschreibung dieser Ausführungsform auf Fig. 1 verwiesen. Die starre Koppelung der beiden Ventilteller 4a und 5a erfolgt in Fig. 2 durch einen insgesamt mit 18 bezeichneten, rechteckigen Rahmen. Dieser Rahmen setzt sich zusammen aus in Längsrichtung verlaufenden Stangen 18b, die über in Querrichtung verlaufende Verbindungsteile 18a miteinander verbunden sind. Der Rahmen 18 ist über Verbindungsstücke 19, welche durch die Gehäusedeckel 1a und 1b hindurchgeführt sind, mit den Abstützkörpern 9 und 10 und damit den Ventiltellern 4a und 5a starr verbunden. Auf diese Weise wird erreicht, daß die starre mechanische Kopplung der beiden Ventilteller 4a, 5a nicht durch das Ventilgehäuse, d. h. also durch die Ventilkammern 6 und 7 und den Zuflußkanal 2, hindurchgeführt ist. Dies kann besondere Vorteile haben, wenn die mit dem Mediumstrom in Berührung kommenden Teile aus besonderem Material, beispielsweise Kunststoff oder hochlegierten, nichtferromagnetischen Werkstoffen bestehen sollen, die Koppelungsvorrichtung selbst aber nicht aus derartigem Material aufgebaut sein soll.

Die Betätigung des Ventils in der Ausführungsform nach Fig. 1 kann auch in der Weise erfolgen, daß durch die Führung im Gehäusedeckel 1a Druckluft zugeführt und damit ein Überdruck hinter der Membran 4 erzeugt wird, oder daß durch die Führung im Gehäusedeckel 1b Luft abgepumpt und damit ein Unterdruck hinter der Membran 5 erzeugt wird.

## Patentansprüche

1. 3/2-Wegeventil mit einem Ventilgehäuse (1), durch welches Zufluß- und Abflußkanäle (2, 3a, 3b) geführt sind und in dem zwei jeweils mit einem der Abflußkanäle (3a, 3b) direkt verbundene Ventilkammern (6, 7) angeordnet sind, die jeweils über einen Ventilsitz (6a, 7a) mit einem gemeinsamen Zuflußkanal (2) verbunden sind, wobei jedem Ventilsitz (6a, 7a) ein in der Ventilkammer (6, 7) angeordneter Ventilteller (4a, 5a) gegenüberliegt, der einstückig in eine geschlossene, mit ihren Rändern am Ventilgehäuse (1) befestigten Membran (4, 5) integriert ist, welche jeweils in einer der Ventilkammern (6, 7) an der dem Ventilsitz (6a, 7a) gegenüberliegenden Seite angeordnet ist und beide Ventilteller (4a, 5a) über eine in ihrer Bewegungsrichtung starre, mechanische Koppelungsvorrichtung (8) so miteinander verbunden sind, daß sich jeweils ein Ventilteller (4a, 5a) in Öffnungsrichtung bewegt, während sich der andere (5a, 4a) in Schließrichtung bewegt und eine Betätigungsvorrichtung zur Bewegung der Ventilteller (4a, 5a) vorhanden ist, dadurch gekennzeichnet, daß Membranen (4, 5) und Ventilteller (4a, 5a) jeweils so ausgebildet sind, daß die Fläche der Membran (4, 5), auf die der Systemdruck bei vom Ventilsitz (6a, 7a) abgehobenem Ventilteller einwirkt, im wesentlichen gleich ist der Fläche, auf die der Systemdruck bei auf den Ventilsitz (6a, 7a) aufgesetztem Ventilteller (4a, 5a) einwirkt und daß die Membranen als Rollmembranen (4, 5) ausgebildet sind,

wobei an der vom Ventilsitz (6a, 7a) abgewandten Seite jeder Rollmembran (4, 5) ein Abstützkörper (9, 10) angeordnet ist, dessen als Abrollfläche für die Membran (4, 5) dienende Mantelfläche einen ersten, sich an den Ventilteller (4a, 5a) anschließenden Abschnitt (9a, 10a) aufweist, der konisch vom Ventilteller weg auf dessen Mittelachse (M) zulaufend ausgebildet ist, sowie einen sich an den ersten Abschnitt anschließenden, zylinderförmig ausgebildeten zweiten Abschnitt (9b, 10b), dem ein hohlzylinderförmiger Abschnitt (11, 12) einer mit dem Ventilgehäuse (1a, 1b) verbundenen Abrollfläche gegenüberliegt, wobei die Dimensionierung des konischen Abschnittes (9a, 10a) so ist, daß der Durchmesser (D) des zwischen den beiden zylindrischen Abschnitten (9b-11, 10b-12) der Abrollflächen liegenden Scheitelkreises der Falte (4b, 5b) der Rollmembran (4, 5) mindestens angenähert dem Durchmesser der Fläche entspricht, auf die der Systemdruck bei auf den Ventilsitz (6a, 7a) aufgesetztem Ventilteller (4a, 5a) einwirkt.

2. Ventil nach Anspruch 1, dadurch gekennzeichnet, daß die Koppelungsvorrichtung als durch das Gehäuse (1) hindurchgeführte Verbindungsstange (8) ausgebildet ist.

3. Ventil nach einem der Ansprüche 1 oder 2, dadurch gekennzeichnet, daß die Koppelungsvorrichtung als rechteckiger, das Ventilgehäuse (1) außen umfassender Rahmen (18) ausgebildet ist.

### Claims

1. A 3/2-way valve comprising a valve housing (1) with inlet and outlet passages (2, 3a, 3b) extending therethrough, in which valve housing (1) two valve chambers (6, 7) are provided each of which is directly connected with one of the outlet passages (3a, 3b), and each of the valve chambers (6, 7) being connected, through a valve seat (6a, 7a), with a common inlet passage (2), whereby each of the valve seats (6a, 7a) is opposed by a valve plate (4a, 5a) arranged in the valve chamber (6, 7) which valve plate is integral with a closed diaphragm (4, 5) secured to the valve housing (1) at its outer edges, each of the diaphragms (4, 5) being arranged in one of the valve chambers (6, 7) on the side thereof opposing the valve seat (6a, 7a); and both valve plates (4a, 5a) being connected to one another through a mechanical coupling device (8) which is rigid in its direction of movement, the connection being such that one each of the valve plates (4a, 5a), moves in opening direction while the other one (5a, 4a) moves in closing direction, whereby an actuating device is provided for displacing the valve plates (4a, 5a), characterized in that the diaphragms (4, 5) and the valve plates (4a, 5a) are formed so that the surface area of the diaphragm (4, 5) on which the system pressure acts when the valve plate is lifted from the valve seat (6a, 7a), substantially equals the surface area on which the system pressure acts when the valve plate (4a, 5a) rests upon the valve seat (6a, 7a), and in that the diaphragms are formed as roll-sliding diaphragms (4, 5) a supporting element (9, 10) being provided on the side of each rollsliding diaphragm facing away from the valve seat (6a, 7a), the surface area of the supporting element (9, 10) which serves as a sliding surface for the diaphragm (4, 5), comprising a first section (9a, 10a) following the valve plate (4a, 5a) and conically extending from the valve plate towards the center axis thereof, and further comprising a cylindrical second section (9b, 10b) following the first section and being opposed by a hollow-cylindrical section of a sliding surface connected with the valve housing (1a, 1b), whereby the conical section (9a, 10a) is dimensioned such that the diameter (D) of the apex circle of the fold (4b, 5b) of the roll-sliding diaphragm (4, 5) which is positioned between the two cylindrical sections (9b-11, 10b-12) of the sliding surfaces, corresponds at least approximately to the diameter of the surface area on which the system pressure acts when the valve plate (4a, 5a) rests upon the valve seat (6a, 7a).

2. A 3/2-way valve as claimed in claim 1, characterized in that the coupling device is formed as a connecting bar (8) passing through the valve housing (1).

3. A 3/2-way valve as claimed in claim 1 or 2, characterized in that the coupling device is formed as a rectangular frame (18) enclosing the valve housing (1) on the outside thereof.

### Revendications

1. Soupape à trois voies et deux positions comportant un carter (1) de soupape qui est traversé par des canaux d'entrée et de sortie (2, 3a, 3b) et dans lequel sont disposées deux chambres de soupape (6, 7) communiquant chacune directement avec l'un des canaux de sortie (3a, 3b) et se trouvant respectivement en communication par l'intermédiaire d'un siège de soupape (6a, 7a) avec un canal d'entrée commun (2), en regard de chaque siège de soupape (6a, 7a) se trouvant un plateau de soupape (4a, 5a) disposé dans la chambre de soupape (6, 7) et étant intégré d'une seule pièce dans une membrane (4, 5) fermée qui est fixée par ses bords sur le carter de soupape (1) et qui est disposée respectivement dans l'une des chambres de soupape (6, 7) du côté opposé au siège (6a, 7a) et les deux plateaux (4a, 5a) étant connectés l'un à l'autre par un dispositif d'accouplement mécanique (8) rigide dans la direction de son déplacement de telle façon qu'un plateau de soupape (4a, 5a) se déplace respectivement dans la direction d'ouverture, tandis que l'autre (5a, 4a) se déplace dans la direction de fermeture, un dispositif de manœuvre étant par ailleurs prévu pour le déplacement des plateaux de soupape (4a, 5a), caractérisée par le fait que les membranes (4, 5) et les plateaux de soupape (4a, 5a) sont respectivement agencés de façon que la surface de la membrane (4, 5) sur laquelle agit la pression du système lorsque le plateau est soulevé à partir du siège de soupape (6a, 7a) soit sensiblement égale à la surface sur laquelle agit la pression du système lorsque le plateau (4a, 5a) est appliqué contre le siège de soupape (6a, 7a) et que les membranes sont agencées en tant que membranes à roulement (4, 5), du côté de chaque membrane à roulement (4, 5) éloignée du siège de soupape (6a, 7a) étant disposé un corps d'appui (9, 10) dont la face d'enveloppe servant de surface de déroulement à la membrane (4, 5) présente une première section (9a, 10a) adjacente au plateau de soupape (4a, 5a) et agencée coniquement à partir du plateau de soupape dans une direction allant se rapprochant de l'axe médian (M) de celui-ci, ainsi qu'une deuxième section (9b, 10b) qui est adjacente à la première section en étant conformée cylindriquement et en regard de laquelle se trouve une section de conformation cylindrique creuse (11, 12) d'une surface de déroulement assemblée au carter de soupape (1a,

1b), le dimensionnement de la section conique (9a, 10a) étant telle que le diamètre (D) du cercle vertical du pli (4b, 5b) de la membrane à roulement (4, 5) situé entre les deux sections cylindriques (9b-11, 10-12) des surfaces de déroulement corresponde au moins de manière approchée au diamètre de la surface sur laquelle agit la pression du système lorsque le plateau de soupape (4a, 5a) est appliqué sur le siège de soupape (6a, 7a).

2. Soupape selon la revendication 1, caractérisée par le fait que le dispositif d'accouplement est agencé en tant que tige de connection (8) introduite dans le carter (1).

3. Soupape selon l'une des revendications 1 ou 2, caractérisée par le fait que le dispositif d'accouplement est agencé en tant que cadre rectangulaire (18) entourant le carter de soupape (1) de l'extérieur.

Fig. 1

0 085 852

Fig. 2

0 085 852